# FASCICULE DE BREVET EUROPEEN

(11) **EP 4 248 553 B1**
(45) Date de publication et mention de la délivrance du brevet: **12.08.2026**
(21) Numéro de dépôt: 21830447.5
(22) Date de dépôt: 18.11.2021
(51) Int. Cl.: H02K 7/116, H02K 11/215, F16H 61/32, F16H 57/02, F16H 61/22, F16H 1/28, F16H 1/46

(54) **ACTIONNEUR POUR UN ORGANE D'UN VÉHICULE AUTOMOBILE TERRESTRE**
AKTUATOR FÜR EINE LANDGESTÜTZTE KRAFTFAHRZEUGKOMPONENTE
ACTUATOR FOR A LAND-BASED MOTOR VEHICLE COMPONENT

(30) Priorité: 20.11.2020 FR 2011944
(43) Date de publication de la demande: 27.09.2023
(73) Titulaire: Electricfil Automotive, 01700 Beynost (FR)
(72) Inventeur: ROUSSEL, Laurent, 69800 SAINT-PRIEST (FR)
(74) Mandataire: Cabinet Beau de Loménie
(86) Numéro de dépôt international: PCT/FR2021/052031
(87) Numéro de publication internationale: WO 2022/106783

(56) Documents cités:
- WO-A1-2019/030856
- FR-A1- 3 074 757
- JP-A- 2002 349 705
- US-A1- 2005 064 980
- US-A1- 2014 021 808

## Description

### Domaine Technique

L'invention concerne le domaine des actionneurs pour actionner un organe d'un véhicule automobile terrestre.

Ce type de véhicule doit répondre à des contraintes d'usage bien connues, mais aussi à des contraintes économiques connues qui nécessitent notamment l'utilisation, pour tous les organes du véhicule, de techniques de construction et d'assemblage compatibles avec l'ensemble des contraintes. Notamment, les contraintes de coûts de production sont prises en compte par l'homme du métier lorsqu'il cherche à concevoir des organes pour ces véhicules.

De manière générale, dans ce domaine, les actionneurs envisagés dans l'invention comportent un boîtier qui délimite un volume interne dans lequel sont agencés au moins un moteur électrique et une transmission mécanique interne. La transmission mécanique interne permet de transmettre un mouvement généré par le moteur électrique jusqu'à un organe de sortie de l'actionneur qui va commander le déplacement d'un autre organe du véhicule, associé à cet actionneur. Lorsqu'on veut faire transiter des valeurs de couple importantes tout en conservant en encombrement réduit, on peut faire appel à une transmission mécanique comprenant au moins un étage d'engrenage épicycloïdal, par exemple un train épicycloïdal simple ou multiple. Ainsi, un étage d'engrenage épicycloïdal peut par exemple comporter deux ou plus trains d'engrenage épicycloïdaux en série. La transmission mécanique interne peut comporter plusieurs étages d'engrenage successifs, avec au moins un étage d'engrenage en plus d'au moins un étage d'engrenage épicycloïdal, un composant de sortie d'un premier étage d'engrenage entraînant un composant d'entrée d'un deuxième étage d'engrenage.

Une telle transmission mécanique interne permet d'obtenir un fort rapport de réduction entre la vitesse de rotation du moteur électrique et la vitesse de rotation d'un arbre de sortie de l'actionneur. Inversement, pour un couple moteur donné délivré par le moteur électrique, le couple disponible sur l'arbre de sortie est considérablement plus important.

Par ailleurs, il est bien souvent nécessaire de connaitre la position de l'organe du véhicule qui est entrainé par l'actionneur. On utilise pour cela un capteur de position angulaire.

Il est avantageux que le capteur de position angulaire soit intégré à l'actionneur puisque bien souvent ce capteur est utilisé pour piloter l'actionneur, notamment pour piloter le moteur électrique. De même, il est avantageux qu'au moins une partie du circuit de commande électronique de l'actionneur soit en partie intégré dans l'actionneur. De ce fait, il y a souvent, dans un tel actionneur, une carte à circuits imprimés sur laquelle sont agencés des composants électroniques du circuit de commande électronique du moteur électrique. Si l'actionneur intègre un capteur de position, il est avantageux que certains au moins des composants électroniques du capteur soient agencés à proximité de ceux de commande du moteur. Ainsi, on prévoit généralement que la mesure de position se fait en mesurant la position angulaire de l'arbre moteur du moteur électrique, ou d'un composant de la transmission mécanique interne qui est agencé à proximité du moteur, notamment en termes de proximité dans la chaine cinématique de la transmission. On mesure ainsi souvent la vitesse de rotation d'un composant d'entrée de la transmission mécanique interne.

Or, lorsque la transmission mécanique interne de l'actionneur présente une démultiplication très forte, avec un rapport de vitesse entre l'entrée et la sortie de la transmission mécanique qui peut être supérieure à 10, voire supérieure à 50, l'erreur de mesure au niveau de l'entrée se traduit par une erreur d'évaluation de la sortie de la transmission qui est, pour faire simple, multipliée par ce même ratio.

Dans les documents WO-2019/099378 ou US-8.975.793, sont décrits des actionneurs comprenant une transmission mécanique interne ayant un étage d'engrenage épicycloïdal réalisé sous la forme d'au moins un train épicycloïdal. Dans ces deux documents, le composant de sortie du train épicycloïdal est une couronne périphérique à denture interne. Le document US 2014/021808 A1 décrit un actionneur similaire à celui qui est décrit dans le document US-8.975.793.

Le document WO-2019/099378 décrit un actionneur ayant une transmission mécanique interne comportant un étage d'engrenage épicycloïdal à deux trains épicycloïdaux. Le composant d'entrée du premier train épicycloïdal est un pignon qui est solidaire d'une pièce étagée formant un corps de rotor du moteur. Ce corps de rotor, ici en forme d'arbre creux, est monté à rotation par un roulement à billes sur une protubérance appartenant à une cloison intermédiaire faisant partie d'une cloison interne appartenant au boîtier de l'actionneur. Ainsi, le rotor du moteur électrique, et donc son corps de rotor et le pignon qui forme le composant d'entrée du premier train épicycloïdal, sont guidés en rotation par rapport à un élément du boîtier. Le composant de sortie du second train épicycloïdal est constitué par la couronne périphérique à denture interne du second train épicycloïdal, laquelle est guidée en rotation dans une partie inférieure du boîtier par l'intermédiaire d'un roulement à billes. Ce dispositif comporte un capteur de position angulaire comportant un détecteur et une cible magnétique. La cible magnétique du capteur de position angulaire est agencée en arrière de l'ensemble du mécanisme à double train épicycloïdaux, et du moteur électrique. La cible magnétique est montée solidaire sur une tige de liaison qui est solidaire en rotation du connecteur mécanique de sortie de l'actionneur et qui est aussi solidaire du composant de sortie du second train épicycloïdal. La tige traverse donc axialement l'ensemble formé par l'étage d'engrenage épicycloïdal à double train épicycloïdaux et par le moteur électrique, selon son axe principal. On remarque que la tige de liaison est libre par rapport à l'ensemble de l'étage d'engrenage épicycloïdal à double train épicycloïdaux, à l'exception bien entendu de son composant de sortie. Le guidage en rotation de l'ensemble, formé par l'étage d'engrenage épicycloïdal à double train épicycloïdaux et par le moteur électrique, est assuré par un montage à roulements à billes, les roulements à billes étant eux-mêmes guidés dans le boîtier. On comprend que la conception du guidage en rotation de l'ensemble formé par l'étage d'engrenage épicycloïdal à double train épicycloïdaux et par le moteur électrique, faisant appel à un guidage par roulement à billes sur le boîtier, entraîne une complexité dans la conception et l'assemblage des pièces. De plus, il nécessite un parfait positionnement entre les parties hautes et basses du boîtier. Comme un tel positionnement parfait ne peut être atteint, le mécanisme à double train épicycloïdaux peut être soumis à des efforts internes non maitrisés et parasites dus à des désalignements entre les composants d'entrée et de sortie notamment.

Le document US-8.975.793 décrit lui aussi une transmission mécanique comportant un étage d'engrenage épicycloïdal à deux trains épicycloïdaux en série. La conception du guidage en rotation de l'ensemble de l'étage d'engrenage épicycloïdal à double trains épicycloïdaux est assurée de la même manière que dans le document précédent, avec un pignon d'entrée de l'étage d'engrenage épicycloïdal qui est solidaire en rotation d'un corps de rotor monté dans le boîtier par une paire de roulements à billes, et un composant de sortie qui est lui aussi guidé par un roulement à billes dans une portion inférieure du boîtier. Là encore, la conception et l'assemblage du dispositif sont complexes, et l'étage d'engrenage épicycloïdal à double trains épicycloïdaux peut être soumis à des efforts internes non maitrisés et parasites, dus par exemple notamment à des désalignements entre les composants d'entrée et de sortie.

Le document WO-2019/030856 A1 décrit lui aussi un actionneur ayant un train épicycloïdal traversé par une tige de liaison, dont une extrémité est reliée au composant de sortie de l'actionneur. L'extrémité de la tige de liaison du côté du composant de sortie est guidée par un roulement à aiguilles, ce qui constitue par définition un système sans aucun débattement radial, non seulement au niveau du roulement à aiguilles, mais aussi un système entièrement et rigidement guidé, sans possibilité de pivotement autour d'un axe perpendiculaire à l'axe de rotation, puisque c'est là une propriété des roulements à aiguilles par rapport aux roulements à billes.

L'Invention a pour but de proposer une architecture d'actionneur qui permet de mettre en œuvre une transmission mécanique interne au boîtier de l'actionneur avec un très fort ratio de démultiplication entre la vitesse du moteur et la vitesse de l'organe de sortie de la transmission mécanique, et qui permet de mesurer avec précision la position angulaire de l'organe de sortie la transmission mécanique interne par des moyens de mesure dont l'intégration dans le capteur peut être faite de manière économique. L'invention a donc pour but de proposer une nouvelle conception d'un actionneur pour un organe d'un véhicule automobile terrestre, notamment pour un véhicule automobile terrestre ayant un poids à vide de moins de 2,5 tonnes, à la fois compact et économique à produire, et pour réduire les efforts parasites dans l'au moins un étage d'engrenage épicycloïdal.

### Exposé de l'invention

Ainsi, l'invention propose un actionneur pour un organe d'un véhicule automobile terrestre comme dans la revendication 1.

D'autres caractéristiques optionnelles de l'invention, prises seules ou en combinaison, sont énumérées ci-après.

Le jeu diamétral de débattement peut être au moins 5 fois supérieur au premier jeu diamétral de guidage.

Le premier jeu diamétral de guidage par rapport à l'axe principal est par exemple inférieur ou égal à 0,05 millimètre, et le jeu diamétral de débattement par rapport à l'axe principal est alors par exemple supérieur ou égal à 0.2 millimètre.

L'étage d'engrenage épicycloïdal peut comporter un train épicycloïdal incluant une première roue dentée et une seconde roue dentée ayant chacune un axe de symétrie de révolution qui coïncide avec l'axe principal, et incluant au moins un jeu de roues dentées satellites montées à libre rotation sur un porte-satellite, et le porte-satellites peut alors former le composant de sortie de l'étage d'engrenage épicycloïdal.

L'étage d'engrenage épicycloïdal peut comporter plusieurs trains épicycloïdaux en série. Dans un tel cas, les trains épicycloïdaux en série de l'étage d'engrenage épicycloïdal peuvent inclure chacun une première roue dentée et une seconde roue dentée ayant chacune un axe de symétrie de révolution qui coïncide avec l'axe principal, et peuvent inclure chacun au moins un jeu de roues dentées satellites montées à libre rotation sur un porte-satellites, et le porte-satellites d'un dernier des trains épicycloïdaux peut alors former le composant rotatif de sortie de l'étage d'engrenage épicycloïdal.

Un premier train épicycloïdal de l'étage d'engrenage épicycloïdal peut comporter une première roue dentée à denture externe qui forme le composant rotatif d'entrée de l'étage d'engrenage épicycloïdal, et le premier train épicycloïdal et le dernier train épicycloïdal peuvent comporter chacun une seconde roue à denture interne qui sont des composants fixes de l'étage d'engrenage épicycloïdal et qui sont reliées sans jeu au boitier d'actionneur.

Le premier train épicycloïdal peut comporter un porte-satellite qui porte un jeu de roues dentées satellites du premier train épicycloïdal et qui est guidé en rotation sur la tige de liaison avec un jeu de guidage.

Un dernier train épicycloïdal de l'étage d'engrenage épicycloïdal peut comporter une première roue dentée à denture externe qui est guidée en rotation sur la tige de liaison avec un jeu de guidage.

L'ensemble rotatif de l'étage d'engrenage épicycloïdal peut être, en arrière de l'étage d'engrenage épicycloïdal, libre de guidage en rotation et libre de positionnement diamétral.

L'axe de rotation de la pièce de sortie moteur du moteur électrique peut être parallèle à l'axe principal.

L'actionneur peut comporter une carte à circuits imprimés qui porte le détecteur du capteur de position angulaire et qui est agencée selon un plan perpendiculaire à l'axe principal, en arrière de l'au moins un jeu de roues dentées satellites, et la cible peut être agencée sur la tige de liaison en regard d'une face avant de la carte à circuits imprimés.

Dans un exemple ne faisant pas partie de l'invention, l'axe de rotation de la pièce de sortie moteur du moteur électrique peut être perpendiculaire à l'axe principal ou être coaxial avec l'axe principal.

Le capteur de position angulaire peut être un capteur à courants de Foucault.

### Brève description des dessins

**[****Fig. 1****]** La **figure 1** est une vue en perspective éclatée d'un mode de réalisation de l'invention.
**[****Fig. 2****]** La **figure 2** représente une vue en coupe du mode de réalisation de la **Fig. 1****,** par un plan contenant l'axe de rotation du moteur électrique et l'axe principal.
**[****Fig. 3****]** La **figure 3** représente une vue en en perspective de certains éléments du mode de réalisation de la **Fig. 1****.**
**[****Fig. 4****]** La **figure 4** représente une vue en coupe de l'étage d'engrenage épicycloïdal du mode de réalisation de la **Fig. 1****,** par un plan contenant l'axe principal.
**[****Fig.** 5] La **figure 5** est une vue similaire à celle de la **Fig. 4** et représente une vue en coupe de l'étage d'engrenage épicycloïdal d'un second mode de réalisation, non conforme à l'invention, par un plan contenant l'axe principal.

### Description des modes de réalisation

L'invention concerne un actionneur **10** pour un organe d'un véhicule automobile terrestre, par exemple pour un véhicule automobile ayant un poids à vide de moins de 2,5 tonnes. L'organe considéré est par exemple un système de verrouillage de la transmission du véhicule, utilisé pour immobiliser le véhicule en stationnement. Un tel système de verrouillage peut compter un mécanisme de type pêne-gâche dans lequel un pêne mobile, porté par un premier élément, est engagé ou retiré d'une gâche, portée par un deuxième élément, selon une direction sensiblement perpendiculaire à une direction de déplacement relatif des deux éléments. Lorsque le pêne est engagé dans la gâche, il immobilise le mouvement relatif entre les deux éléments qui portent respectivement le pêne et la gâche. Lorsque le pêne est dégagé de la gâche il rend le mouvement relatif possible entre les deux éléments. Dans certains cas, le déverrouillage doit se faire sous effort, avec des efforts de frottement entre le pêne et la gâche qui nécessitent un effort important pour retirer le pêne de la gâche, nécessitant donc un mécanisme d'actionnement du pêne ayant un actionneur capable de délivrer une force ou un couple de valeur importante. Bien entendu, dans un système pêne-gâche, on peut avoir la gâche mobile par rapport à un pêne immobile, ou alors avoir une gâche et un pêne tous les deux mobiles par rapport par exemple à un bâti fixe.

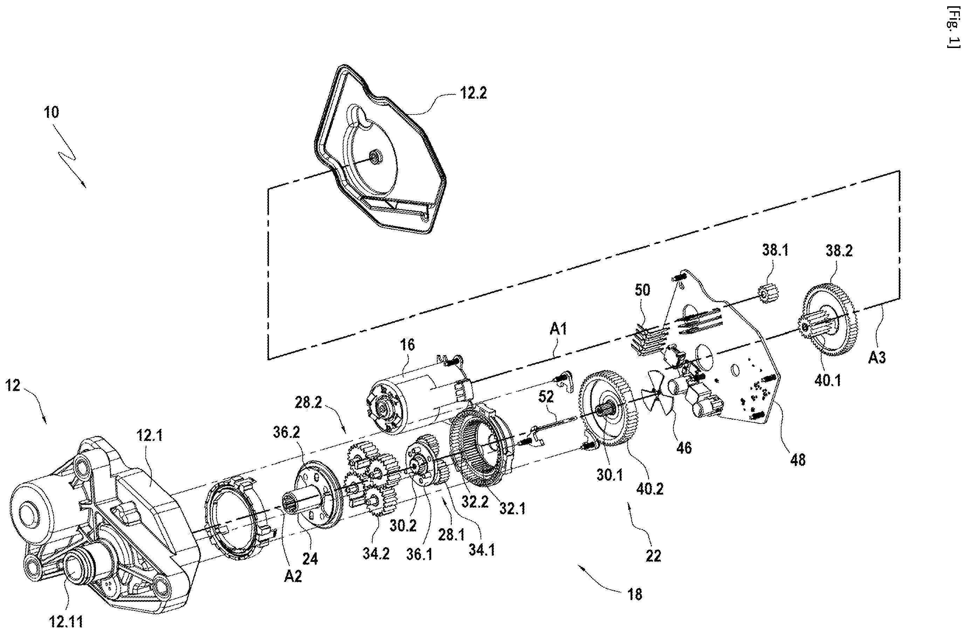

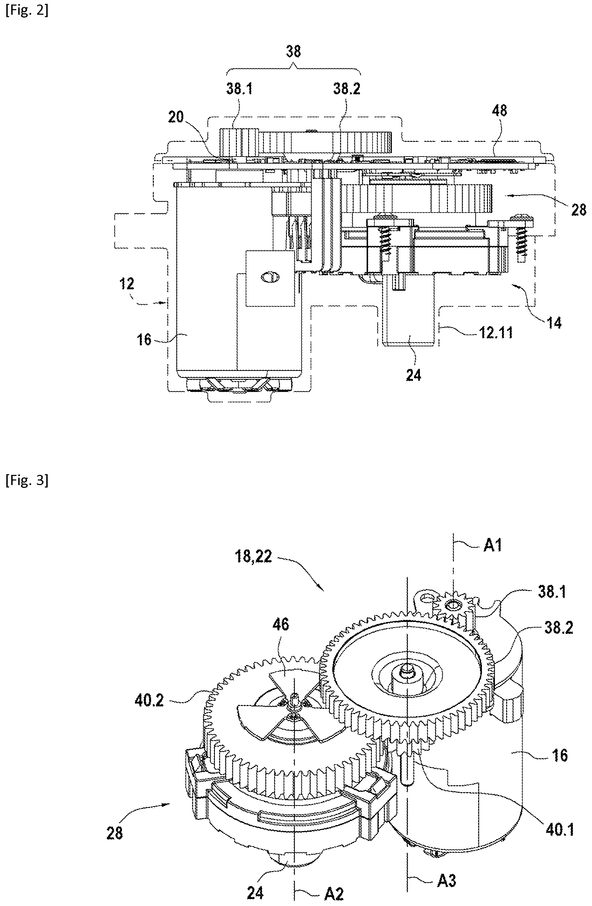

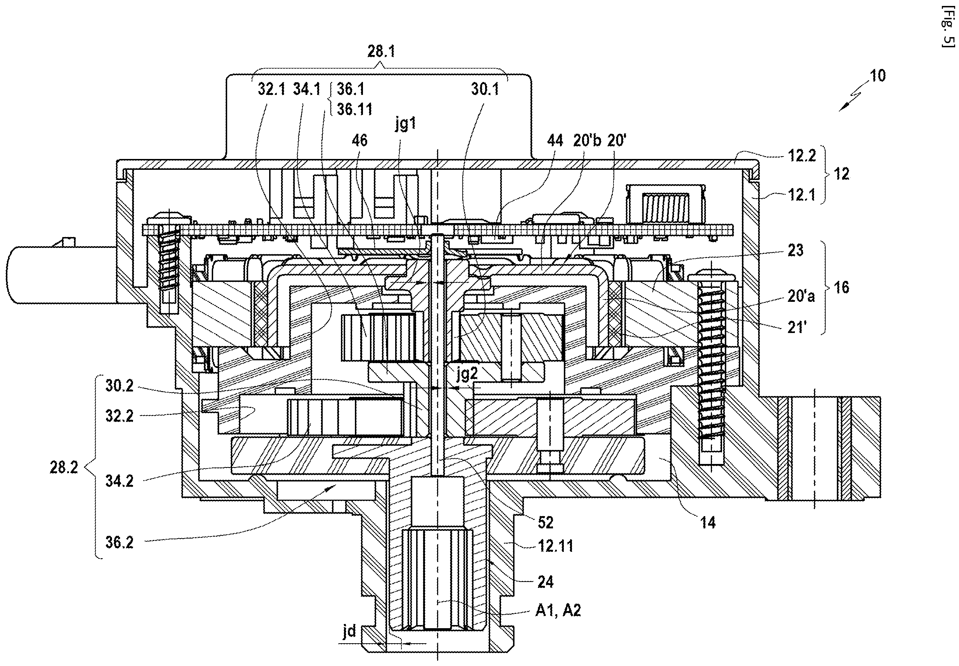

Les deux variantes d'actionneur **10** illustrées sur les figures comportent un boitier d'actionneur **12** qui délimite un volume interne **14** dans lequel sont agencés :
- au moins un moteur électrique **16** ayant une pièce de sortie moteur qui peut par exemple prendre la forme, entre autres, d'un arbre moteur **20,** comme dans le premier exemple des **Figs. 1**à 4**,** ou, d'un corps de rotor **20',** comme dans le deuxième exemple de la **Fig. 5****,** la pièce de sortie moteur **20, 20'ayant** un axe de rotation **A1** correspondant à l'axe de rotation du rotor du moteur électrique **16** ;
- et une transmission mécanique interne **18** comprenant au moins un train d'engrenages réducteur **22** pour transmettre un mouvement de la pièce de sortie moteur du moteur électrique **16** à un connecteur mécanique de sortie **24** de l'actionneur **10.**

Dans les exemples, la transmission mécanique interne **18** est intégralement contenue à l'intérieur du boîtier d'actionneur **12.** Dans les exemples, le boîtier est sous la forme d'un corps principal de boitier **12.1** et d'un couvercle arrière **12.2.** Le volume interne **14** délimité par le boitier **12** est un volume qui est fermé, à l'exception d'un puits de sortie **12.11** aménagé dans une paroi avant du corps principal de boitier **12.1.** Dans les exemples, la transmission mécanique interne **18** reçoit un mouvement rotatif communiqué par la pièce de sortie moteur **20, 20',** et délivre, en sortie d'actionneur **10,** un mouvement rotatif au niveau du connecteur mécanique de sortie **24.** Le connecteur mécanique de sortie **24** sort du volume interne au travers du puits de sortie **12.11** ou est accessible depuis l'extérieur du boîtier **12** au travers du puits de sortie **12.11.** De préférence, la transmission mécanique interne **18** fonctionne en tant que réducteur de vitesse en assurant un ratio de réduction, qui est défini, pour la transmission mécanique interne **18** dans son ensemble, comme étant la vitesse de rotation de la pièce de sortie moteur **20** divisée par la vitesse de rotation du connecteur mécanique de sortie **24,** qui est de préférence supérieur ou égal à 10, plus préférentiellement supérieur ou égal à 50.

Pour assurer le niveau recherché de réduction de la vitesse de rotation, le train d'engrenages réducteur **22** comporte au moins un étage d'engrenage épicycloïdal **28.1, 28.2,** ayant un composant d'entrée **30.1** et un composant de sortie **36.2** qui sont rotatifs par rapport au boîtier autour d'un axe principal **A2,** et au moins un jeu de roues dentées satellites **34.1, 34.2** qui est interposé mécaniquement entre le composant d'entrée **30.1** et le composant de sortie **36.2.** De manière connue, les roues dentées satellites sont animées d'un mouvement orbital pour transformer un mouvement rotatif du composant d'entrée **30.1** en mouvement rotatif du composant de sortie **36.2,** la vitesse de rotation du composant d'entrée **30.1** étant supérieure à la vitesse de rotation du composant de sortie **36.2.**

L'étage d'engrenage épicycloïdal **28** peut par exemple comprendre un unique train épicycloïdal ou plusieurs trains épicycloïdaux en série.

Dans un mode de réalisation, non illustré sur les figures, l'étage d'engrenage épicycloïdal **28** peut comprendre un unique train épicycloïdal incluant une première roue dentée et une seconde roue dentée ayant chacune un axe de symétrie de révolution. L'axe de symétrie de révolution la première roue dentée et de la seconde roue dentée seraient confondus et coïncideraient avec l'axe principal **A2** (sous-entendu aux tolérances de fonctionnement près). Le train épicycloïdal inclut au moins un jeu de roues satellites qui sont montées à libre rotation sur un porte-satellite, chacune autour d'un axe parallèle mais distinct par rapport à l'axe principal **A2.** Dans un tel cas, l'un parmi la première roue dentée, la seconde roue dentée et le porte-satellites forme le composant d'entrée de l'étage d'engrenage épicycloïdal **28,** tandis qu'un autre parmi la première roue dentée, la seconde roue dentée et le porte-satellites forme le composant de sortie de l'étage d'engrenage épicycloïdal **28.** Généralement, le troisième parmi la première roue dentée, la seconde roue dentée et le porte-satellites, est fixe en rotation par rapport au boîtier.

Dans les deux exemples illustrés plus particulièrement respectivement sur les **Figs. 1**à 4 et sur la **Fig. 5****,** l'étage d'engrenage épicycloïdal **28** comporte plusieurs trains épicycloïdaux, agencés mécaniquement en série, en l'occurrence deux trains épicycloïdaux agencés mécaniquement en série, à savoir un premier train épicycloïdal **28.1** et un deuxième train épicycloïdal **28.2,** le deuxième train épicycloïdal **28.2** étant donc le dernier train épicycloïdal de l'étage d'engrenage épicycloïdal **28.**

Dans la suite, les notions d'amont et d'aval se réfèrent à la direction de l'enchainement des différents éléments de la transmission mécanique interne **18,** en termes de positionnement dans la transmission de mouvement, dans le sens allant de la pièce de sortie moteur **20** du moteur électrique **16** vers le connecteur mécanique **24.** Par ailleurs, les notions avant et arrière se réfèrent au positionnement des différentes pièces de l'actionneur dans le boitier **12** selon la direction de l'axe principal **A2,** permettant d'indiquer un positionnement relatif de ces différentes pièces le long de cet axe principal **A2.** De manière arbitraire, on considère que, dans les exemples illustrés, le connecteur mécanique de sortie **24** de l'actionneur **10** est agencé vers l'avant par rapport à l'étage d'engrenage épicycloïdal **28** le long de l'axe principal **A2.**

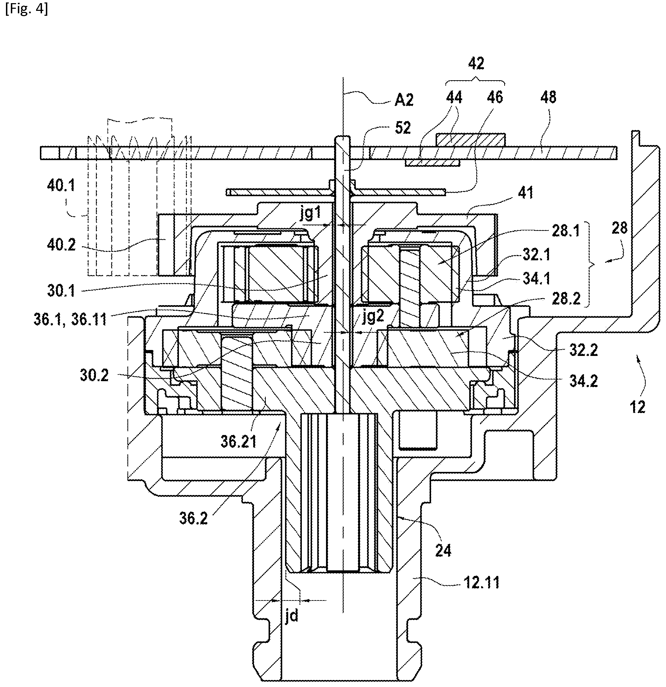

Ainsi, comme on peut le voir plus particulièrement respectivement sur les **Figs. 1** et **4** et sur la **Fig. 5****,** les trains épicycloïdaux **28.1, 28.2** en série de l'étage d'engrenage épicycloïdal **28** incluent chacun une première roue dentée **30.1 30.2** et une seconde roue dentée **32.1, 32.2** ayant chacune un axe de symétrie de révolution qui coïncide avec l'axe principal **A2** (sous-entendu aux tolérances de fonctionnement près), et incluent chacun un jeu de roues dentées satellites **34.1, 34.2** qui sont montées à libre rotation sur un porte-satellite **36.1, 36.2,** chacune des roues dentées satellites **34.1, 34.2** étant ainsi montée sur le porte satellites correspondant en étant mobile à rotation autour de son propre axe de rotation parallèle à l'axe principal **A2** mais distinct de celui-ci. Dans chaque train épicycloïdal **28.1, 28.2,** les roues dentées satellites **34.1, 34.2** du jeu de roues dentées satellites engrènent simultanément avec la première roue dentée et la deuxième roue dentée du train épicycloïdal considéré. Chacune des roues dentées satellites **34.1, 34.2** d'un train épicycloïdal donné forme, pour ce train épicycloïdal, un composant orbital qui est animé, en fonctionnement, d'un mouvement orbital autour de l'axe principal **A2,** c'est-à-dire un mouvement composé d'une rotation de la roue dentée satellite autour de son propre axe, lequel est lui-même animé d'un mouvement de rotation autour de l'axe principal **A2.** L'un parmi la première roue dentée **30.1,** la seconde roue dentée **32.1** et le porte-satellites **36.1** du premier train épicycloïdal **28.1** forme le composant rotatif d'entrée de l'étage d'engrenage épicycloïdal **28,** tandis qu'un parmi la première roue dentée **30.2,** la seconde roue dentée **32.2** et le porte-satellites **36.2** du deuxième train épicycloïdal **28.2** forme le composant rotatif de sortie de l'étage d'engrenage épicycloïdal **28.** Dans les deux exemples illustrés, le premier train épicycloïdal **28.1** est ainsi agencé en arrière du deuxième train épicycloïdal **28.2** selon la direction de l'axe principal **A2.**

On note que, dans les modes de réalisation illustrés, qui ont deux trains épicycloïdaux en série, chacun des deux trains épicycloïdaux comporte son propre jeu de roues dentées satellites, et son propre porte-satellites. Cependant, l'invention peut être mise en œuvre avec deux trains épicycloïdaux en série comportant au moins un composant commun, par exemple un jeu de roues dentées satellites commun ou un porte-satellites commun.

Dans les exemples illustrés, le composant d'entrée **30** de l'étage d'engrenage épicycloïdal **28** est relié mécaniquement à la pièce de sortie moteur **20, 20'** par une liaison mécanique qui, dans le premier exemple de réalisation qui est illustré aux **Figs. 1**à 4**,** comporte par exemple au moins un étage d'engrenage amont, mais qui, dans le second exemple illustré à la **Fig. 5****,** est une liaison mécanique directe.

Dans le premier exemple illustré aux **Figs. 1**à 4**,** la transmission mécanique interne **18** comporte, en amont de l'étage d'engrenage épicycloïdal **28,** un premier étage d'engrenage amont **38** et un deuxième étage d'engrenage amont **40.** Le premier étage engrenage amont **38** comporte un pignon de sortie moteur **38.1** qui est monté directement sur l'arbre moteur **20** et qui engrène avec une roue dentée aval **38.2** rotative dans le boîtier **12** autour d'un axe intermédiaire **A3.** L'axe intermédiaire **A3** est ici parallèle à l'axe **A1** du moteur électrique **16** et à l'axe principal **A2.** Dans ce premier exemple, le deuxième étage d'engrenage amont **40** comporte une roue dentée amont **40.1** qui est solidaire et coaxiale avec la roue dentée aval **38.2** du premier étage d'engrenage amont **38,** donc rotative dans le boîtier **12** autour de l'axe intermédiaire **A3.** Cette roue dentée amont **40.1** du deuxième étage d'engrenage amont **40** coopère avec une roue dentée aval **40.2** du deuxième étage d'engrenage amont **40,** dont on verra plus loin qu'elle entraîne le composant d'entrée **30.1** de l'étage d'engrenage épicycloïdal **28.**

Comme illustré à la **Fig. 4** et à la **Fig.5****,** le premier train épicycloïdal **28.1** comporte ainsi, dans les deux modes de réalisation illustrée, une première roue dentée **30.1** sous la forme d'un pignon central à denture externe et une deuxième roue dentée **32.1** sous la forme d'une couronne à denture interne, avec trois roues dentées satellites **34.1** qui sont agencées radialement entre la première roue dentée et la deuxième roue dentée, en engrenant avec les deux.

Comme on peut le voir plus particulièrement sur la **Fig. 4****,** la première roue dentée **30.1** du premier train épicycloïdal **28.1** est, pour le premier mode de réalisation, solidaire et coaxiale avec la roue dentée aval **40.2** du deuxième étage engrenage amont **40.** Dans cet exemple, la première roue dentée **30.1** du premier train épicycloïdal **28.1** et la roue dentée aval **40.2** du deuxième étage engrenage amont **40** sont reliées l'une à l'autre par un flasque transversal **41** qui est agencé vers l'arrière par rapport à l'étage d'engrenage épicycloïdal **28.** La première roue dentée **30.1** du premier train épicycloïdal **28.1,** dont l'axe est l'axe principal **A2** (sous-entendu aux tolérances de fonctionnement près) s'étend axialement vers l'avant selon la direction de l'axe **A2** par rapport à ce flasque transversal **41** de manière à s'engager entre les satellites **34.1** du premier train épicycloïdal **28.1,** et à engrener avec les satellites **34.1** du premier train épicycloïdal **28.1.** Le flasque **41** forme donc ici une liaison mécanique par laquelle le composant d'entrée **30.1** de l'étage d'engrenage épicycloïdal **28** est relié vers l'amont à la pièce de sortie moteur **20.** On voit que cette liaison mécanique est agencée en arrière des roues dentées satellites **34.1** du premier train épicycloïdal **28.1,** selon la direction de l'axe principal **A2.**

Dans le second mode de réalisation illustré à la **Fig. 5****,** non conforme à l'invention, la première roue dentée **30.1** du premier train épicycloïdal **28.1** est directement solidaire d'un corps de rotor **20'** du moteur électrique **16.** Le corps de rotor **20'** présente ici une portion annulaire externe **20'a** qui supporte par exemple un bobinage de rotor ou une série d'aimants permanents **21'** du moteur électrique **16.** Le corps de rotor **20'** est un corps de révolution autour de l'axe **A1** du moteur électrique qui, dans ce deuxième exemple, se trouve confondu, aux tolérances de fonctionnement près, avec l'axe principal **A2** de l'étage d'engrenage épicycloïdal **28.** De manière classique, le corps de rotor **20'** est reçu coaxialement au centre d'un stator **23** du moteur électrique **16.** La première roue dentée **30.1** du premier train épicycloïdal **28.1,** dont l'axe est l'axe principal **A2** (sous-entendu aux tolérances de fonctionnement près) s'étend axialement vers l'avant selon la direction de l'axe **A2** par rapport à un flasque transversal **20'b** du corps de rotor **20'** tout en étant reçue au centre de la portion annulaire externe **20'a** du corps de rotor **20'.** Comme dans le premier mode de réalisation, la première roue dentée **30.1** s'engage entre les satellites **34.1** du premier train épicycloïdal **28.1,** et engrène avec les satellites **34.1** du premier train épicycloïdal **28.1.** Dans ce second mode de réalisation aussi, la liaison mécanique entre le composant d'entrée **30** de l'étage d'engrenage épicycloïdal **28** et la pièce de sortie moteur **20',** ici réalisée par un flasque transversal **20'b** du corps de rotor **20',** est agencée en arrière des roues dentées satellites **34.1** du premier train épicycloïdal **28.1,** selon la direction de l'axe principal **A2.**

Dans les deux modes de réalisation illustrés, le deuxième train épicycloïdal **28.2** comporte lui aussi une première roue dentée **30.2** sous la forme d'un pignon central à denture externe et une deuxième roue dentée **32.2** sous la forme d'une couronne à denture interne, avec ici quatre roues dentées satellites **34.2** qui sont agencées radialement entre la première roue dentée et la deuxième roue dentée de ce deuxième train épicycloïdal **28.2,** en engrenant avec les deux. Comme on peut le voir plus particulièrement sur la **Fig.** 4 ou sur la **Fig. 5****,** la première roue dentée **30.2** du deuxième train épicycloïdal **28.2** est solidaire et coaxiale avec le porte-satellites **36.1** du premier train épicycloïdal **28.1,** avec pour axe commun l'axe principal **A2** (sous-entendu aux tolérances de fonctionnement près). Dans cet exemple, le porte-satellites **36.1** du premier train épicycloïdal **28.1** comporte une structure centrale **36.11** qui s'étend perpendiculairement à l'axe principal **A2.** Les roues dentées satellites **34.1** du premier train épicycloïdal **28.1** sont agencées axialement vers l'arrière selon la direction de l'axe principal **A2** par rapport à cette structure centrale **36.11.** Au contraire, la première roue dentée **30.2** du deuxième train épicycloïdal **28.2** s'étend axialement vers l'avant selon la direction de l'axe principal **A2** depuis cette structure centrale **36.11,** de manière à s'engager entre les roues dentées satellites **34.2** du deuxième train épicycloïdal **28.2,** et à engrener avec les satellites **34.2** du deuxième train épicycloïdal **28.2.** Dans les deux exemples, le porte-satellites **36.2** du deuxième train épicycloïdal **28.1** comporte une structure centrale **36.21** qui s'étend perpendiculairement à l'axe principal **A2.** Les roues dentées satellites **34.2** du deuxième train épicycloïdal **28.2** sont agencées axialement vers l'arrière selon la direction de l'axe principal **A2** par rapport à cette structure centrale **36.21.**

Dans les exemples, le connecteur mécanique de sortie **24** est directement solidaire en rotation du composant de sortie **36.2** de l'étage d'engrenage épicycloïdal **28,** ces deux éléments étant donc rotatifs autour de l'axe principal **A2** (sous-entendu aux tolérances de fonctionnement près). Ainsi, on peut voir que le connecteur mécanique de sortie **24** s'étend axialement vers l'avant selon la direction de l'axe principal **A2** depuis la structure centrale **36.11** du porte-satellites **36.2.**

Dans les exemples illustrés, le connecteur mécanique de sortie **24** de l'actionneur **10** présente une forme cylindrique de révolution selon la direction de l'axe **A2** (sous-entendu aux tolérances de fonctionnement près). Son extrémité avant est configurée pour former une liaison mécanique permettant de transmettre le mouvement du connecteur mécanique de sortie **24** directement ou indirectement à l'organe mécanique qui doit être entraîné par l'actionneur **10.** Dans les deux exemples illustrés, cette extrémité avant est ainsi de forme tubulaire selon l'axe principal **A2.** Elle est par exemple munie de formes favorables à l'accouplement mécanique, ici par des cannelures d'axe parallèle à l'axe principal **A2.** Typiquement, avec une telle configuration, un arbre de sortie présentant des cannelures complémentaires pourra être engagé axialement dans le connecteur mécanique de sortie **24** pour permettre l'entraînement de l'organe par l'actionneur **10.** On remarque donc que le connecteur mécanique de sortie **24,** qui est destiné à être relié à l'organe du véhicule automobile terrestre, forme une liaison mécanique vers l'avant par rapport des roues dentées satellites **34.2** du deuxième train épicycloïdal **28.2** selon la direction de l'axe principal **A2.**

L'actionneur **10** selon l'invention comporte un capteur de position angulaire **42** comportant un détecteur **44** et une cible **46.** Le capteur de position angulaire **42** vise à donner une information la plus précise possible quant à la position angulaire de l'organe qui est actionné par l'actionneur **10.** Pour cela, l'invention l'actionneur présente un agencement dans lequel le capteur de position angulaire **42** est capable de mesurer avec précision, et à moindre coût, la position angulaire du connecteur mécanique de sortie **24** de l'actionneur, de manière directe, permettant d'éliminer toute influence d'éventuelles jeux ou imperfections dans la transmission mécanique interne **18.**

De préférence, le capteur de position angulaire **42** est un capteur de type sans contact. Un tel capteur sans contact peut être par exemple un capteur à courants de Foucault, aussi appelé capteur de type inductif, dans lequel le détecteur **44** est apte à créer un champ électromagnétique et à mesurer une valeur représentative d'un champ électromagnétique. Dans un capteur **42** à courants de Foucault, le détecteur **44** comporte par exemple une bobine reliée à un composant électronique à circuits intégrés, par exemple de type « ASIC » (« Application-Specific Integrated Circuit ». La cible **46** d'un capteur de type inductif possède des propriétés électromagnétiques qui lui permettent, lorsqu'elle passe devant le détecteur **44,** de modifier les propriétés du champ électromagnétique de telle sorte que cette modification soit détectée par le détecteur. Par exemple, la cible comporte des éléments métalliques dans lesquels le champ électromagnétique créé par le détecteur induit des courants de Foucault, ces courants de Foucault induits venant en retour perturber le champ électromagnétique, ce qui peut être détecté par le détecteur **44.** De préférence, le capteur de position angulaire **42** délivre une information relative à la position angulaire mécanique des deux pièces qui sont mobiles en rotation l'une par rapport à l'autre autour de l'axe principal A2, dont l'une porte le détecteur 44 et l'autre porte la cible 46.

En pratique, il sera souvent plus aisé de fixer le détecteur 44 sur une pièce fixe puisque le détecteur 44 est amené à échanger des informations, notamment des signaux électriques de mesure, avec un système plus large auquel le capteur de position angulaire peut être intégré, par exemple un système électronique de contrôle du moteur électrique 16.

Avantageusement, on peut voir sur les figures que la cible 46 du capteur de position angulaire 42 est agencée en arrière de l'étage d'engrenage épicycloïdal **28.** Plus particulièrement, on peut définir arbitrairement la position de l'étage d'engrenage épicycloïdal **28,** selon la direction de l'axe principal **A2,** comme étant celle d'au moins un jeu de roues dentées satellites **34.1, 34.2** de cet étage d'engrenage épicycloïdal **28.** De ce fait, la cible **46** du capteur de position angulaire **42** est, selon la direction de l'axe principal **A2,** agencée en arrière des roues dentées satellites **34.1, 34.2** selon la direction de l'axe principal **A2** de l'étage d'engrenage épicycloïdal **28.** Cet agencement est particulièrement avantageux car il permet de disposer le capteur de position angulaire **42** dans le boîtier **12** à un endroit qui en facilite l'intégration dans l'actionneur **10.**

Dans les deux exemples illustrés, l'actionneur **10** comporte une carte à circuits imprimés **48** qui porte le détecteur **44** du capteur de position angulaire **42** et qui est agencée selon un plan perpendiculaire à l'axe principal **A2,** en arrière de l'étage d'engrenage épicycloïdal **28,** donc en arrière d'au moins un jeu de roues dentées satellites de cet étage d'engrenage épicycloïdal **28** selon la direction de l'axe principal **A2.** Typiquement, cette carte à circuits imprimés **48** peut comporter tout ou partie d'un circuit électronique de commande du moteur électrique. Cette carte à circuits imprimés **48** peut comporter tout ou partie d'un circuit électronique de prétraitement ou de traitement des signaux électriques fournis par le détecteur **44,** lesquels signaux sont représentatifs de la position angulaire mesurée par le capteur de position angulaire. De tels circuits électroniques portés par la carte à circuits imprimés **48** peuvent comprendre au moins une unité de calcul électronique ayant par exemple un microprocesseur, de la mémoire électronique et des interfaces électroniques d'entrées/sorties. On prévoit avantageusement, que la carte à circuits imprimés **48** porte ou est reliée à une interface de communication informatique, par exemple un connecteur **50,** qui peut aussi être portée par la carte à circuits imprimés. Le connecteur **50** permet d'implémenter une liaison électrique et/ou informatique. Bien entendu, le connecteur **50** peut être remplacé ou complété, en tant qu'interface de communication informatique, par une unité électronique de communication sans fil, par exemple de type Wifi^{®}, Bluetooth^{®} ou autre. Un actionneur ainsi équipé peut-être qualifié de détecteur « intelligent ». On comprend qu'en agençant ainsi le détecteur **44** en arrière de l'étage de d'engrenage épicycloïdal **28,** on facilite son intégration dans le boîtier **12** de l'actionneur **10.**

En revanche, pour assurer la mesure la plus précise possible de la position angulaire du connecteur mécanique de sortie **24,** la cible **46** du capteur de position angulaire **42** est solidaire en rotation de ce connecteur mécanique de sortie **24.** Pour cela, la cible **46** est montée solidaire sur une tige de liaison **52** qui est solidaire en rotation du connecteur mécanique de sortie **24 de** l'actionneur **10** et qui traverse axialement l'étage d'engrenage épicycloïdal **28** selon son axe principal **A2.**

Dans les exemples illustrés, le connecteur mécanique de sortie **24** est solidaire en rotation du composant de sortie **36.2** de l'étage d'engrenage épicycloïdal **28** de sorte que le composant de sortie de l'étage d'engrenage épicycloïdal **28** tourne, en fonctionnement de l'actionneur, à la même vitesse de rotation autour de l'axe principal **A2** que le connecteur de sortie **24** de l'actionneur et occupe à chaque instant la même position angulaire. Dans ce cas, la tige de liaison **52** est solidaire en rotation du composant de sortie **36.2** de l'étage d'engrenage épicycloïdal **28.**

Dans les deux exemples illustrés, le connecteur mécanique de sortie **24** est même rigidement lié au composant de sortie **36.2** de l'étage d'engrenage épicycloïdal **28,** donc sans jeu entre les deux, selon aucune direction. Cependant, on pourrait prévoir que le connecteur mécanique de sortie **24** soit solidaire en rotation du composant de sortie **36.2** de l'étage d'engrenage épicycloïdal **28,** mais avec du jeu entre les deux, selon une ou plusieurs directions perpendiculaires à l'axe principal **A2,** par exemple pour autoriser une certaine excentricité et/ou un certain désaxage entre les deux, tout en conservant une position angulaire identique du connecteur mécanique de sortie **24** avec le composant de sortie **36.2** de l'étage d'engrenage épicycloïdal **28.**

La tige de liaison **52** s'étend donc selon l'axe principal **A2** et traverse axialement l'étage d'engrenage épicycloïdal **28.** Comme on peut le voir sur les figures, la cible **46** est agencée sur la tige de liaison **52** en regard d'une face avant de la carte à circuits imprimés **48.** Cependant, on comprend que, alternativement, elle pourrait être agencée sur la tige de liaison **52** en regard d'une face arrière de la carte à circuits imprimés **48,** la tige de liaison **52** traversant dans ce cas la carte à circuits imprimés **48.**

Dans le premier exemple illustré sur les **Figs. 1**à 4**,** on remarque que l'axe de rotation **A1** de la pièce de sortie moteur **20** du moteur électrique **16** est parallèle à l'axe principal **A2** de l'étage d'engrenage épicycloïdal **28,** les deux axes étant décalés l'un de l'autre. Cette configuration est obtenue dans ce mode de réalisation par la présence d'au moins un train d'engrenages à axes parallèles, tel que le premier étage d'engrenage amont **38** et/ou le deuxième étage d'engrenage amont **40.** Cette configuration est par exemple adaptée à des moteurs électriques relativement courts selon la direction de leur axe. Dans le cas de moteur plus long selon la direction de leur axe, on peut au contraire prévoir que le moteur électrique soit agencé de telle sorte que l'axe de rotation du moteur électrique soit perpendiculaire à l'axe principal. Dans un tel cas, la transmission mécanique interne comporte un renvoi d'angle, qui peut par exemple être réalisé par un couple de pignons coniques, ou avec une roue d'engrenage présentant une denture, dite axiale, qui est formée de dents d'engrenage ayant une extension pied-tête selon la direction de son axe de rotation, tel que décrit dans le document WO-2019/048753-A1. Dans le deuxième exemple illustré sur la **Fig. 5****,** l'axe de la pièce de sortie moteur **20'** du moteur électrique **16** est coaxial à l'axe principal **A2** de l'étage d'engrenage épicycloïdal **28.**

Dans les deux exemples illustrés, le moteur électrique est agencé, selon la direction de l'axe principal **A2,** en avant de la carte à circuits imprimés **48** qui porte le détecteur du capteur de position angulaire. Le moteur électrique **16** est donc agencé à la même hauteur que l'étage d'engrenage épicycloïdal **28,** selon la direction de l'axe principal **A2.** Cette disposition est donc favorable à la compacité de l'actionneur **10** selon cette direction.

Par ailleurs, dans le premier mode de réalisation illustré aux **Figs. 1**à 4**,** la pièce de sortie moteur **20** est agencée en arrière du moteur électrique **16.** En l'occurrence, l'arbre moteur **20** s'étend vers l'arrière du moteur électrique **16.** Là encore, par le repliement à **180°** de la chaine de transmission du mouvement, on favorise la compacité de l'actionneur **10** selon la direction de l'axe principal **A2.**

Dans le premier mode de réalisation illustré, il y a un au moins un étage d'engrenage, ici un premier étage d'engrenage amont **38,** qui, selon la direction de l'axe principal (A2), est agencé en arrière de la carte à circuits imprimés **48** qui porte le détecteur **44** du capteur de position angulaire **42.** En effet, on peut voir que le pignon de sortie moteur **38.1** est solidaire de l'arbre moteur **20,** lequel traverse axialement le plan d'extension de la carte à circuits imprimés **48.** Dans cet exemple, la chaine de transmission du mouvement traverse donc deux fois le plan d'extension de la carte à circuits imprimés **48.** Cette disposition permet de rapprocher le capteur de position angulaire **42,** qui est porté par la carte à circuits imprimés **48,** du connecteur mécanique de sortie **24** de l'actionneur **10.** Cela permet de réduire la longueur de la tige de liaison **52,** et permet de réduire le volume total de l'actionneur.

Selon un aspect notable de l'actionneur, la tige de liaison 52 sert aussi d'arbre de guidage pour les éléments de l'étage d'engrenage épicycloïdal **28** qui sont animés d'un mouvement de rotation autour de l'axe principal **A2** de l'étage d'engrenage épicycloïdal **28.**

Ainsi, le composant d'entrée de l'étage d'engrenage épicycloïdal, ici la première roue dentée **30.1** du premier train épicycloïdal **28.1,** est guidé en rotation sur la tige de liaison **52** avec un premier jeu diamétral de guidage « **jg1** » par rapport à l'axe principal **A2.** Ce premier jeu diamétral de guidage « **jg1** » est choisi le plus petit possible pour réduire le plus possible le débattement diamétral du composant d'entrée par rapport à la tige de liaison **52,** tout en permettant la libre rotation du composant d'entrée de l'étage d'engrenage épicycloïdal **28** sur la tige de liaison **52** autour de l'axe principal **A2.** Pour permettre la libre rotation, le premier jeu diamétral de guidage est positif.

Dans les deux exemples, le composant de sortie de l'étage d'engrenage épicycloïdal, ici le porte-satellite **36.2** du deuxième train épicycloïdal **28.2,** est rigidement lié à la tige de liaison **52.** Ceci peut être réalisé par exemple par un montage serré du composant de sortie sur la tige de liaison **52.** Un tel montage serré peut être assimilé à la présence d'un jeu diamétral strictement négatif entre le composant de sortie et la tige de liaison **52.**

Du fait de leur montage sur la tige de liaison **52** avec un jeu diamétral de guidage le plus petit possible, pour le composant d'entrée **30.1,** ou serré sur la tige de liaison **52,** pour le composant de sortie **36.2,** ces deux composants de l'étage d'engrenage épicycloïdal **28** appartiennent avec la tige **52** à un ensemble rotatif de l'étage d'engrenage épicycloïdal **28.**

On prévoit avantageusement que l'ensemble rotatif de l'étage d'engrenage épicycloïdal **28** est positionné par rapport au boitier d'actionneur **12,** diamétralement par rapport à l'axe principal **A2,** avec un jeu diamétral de débattement « **jd** », le jeu diamétral de débattement par rapport à l'axe principal **A2** étant au moins 3 fois supérieur au premier jeu diamétral de guidage « **jg1** » par rapport à l'axe principal **A2,** de préférence au moins 5 fois supérieur au premier jeu de guidage « **jg1** ».

Dans les deux exemples illustrés, on voit ainsi que le porte satellite **36.2** du deuxième train d'engrenages épicycloïdal **28 .2** est reçu dans le puits de sortie **12.1** du boîtier **12** avec un jeu diamétral de débattement « **jd** » pour limiter le débattement diamétral de l'ensemble rotatif de l'étage d'engrenage épicycloïdal **28** par rapport au boitier d'actionneur **12.**

Par exemple, le premier jeu diamétral de guidage « **jg1** » est inférieur ou égal à 0,05 millimètre, tandis que le jeu diamétral de débattement « **jd** » est supérieur ou égal à 0.2 millimètre.

Le jeu diamétral entre deux pièces, par rapport à un axe donné, est déterminé en mesurant la possibilité de déplacement maximale entre les deux pièces selon une direction perpendiculaire à l'axe donné.

Dans le deuxième exemple illustré à la **Fig. 5****,** non conforme à l'invention, le composant d'entrée 30.1 de l'étage d'engrenage épicycloïdal **28** est rigidement lié au corps de rotor **20'** du moteur électrique **16.** De la sorte, on comprend que, dans ce deuxième exemple, le corps de rotor **20'** du moteur électrique **16** est lui aussi guidé en rotation sur la tige de liaison **52** avec le premier jeu diamétral de guidage « **jg1** » par rapport à l'axe principal **A2,** ici donc par l'intermédiaire du composant d'entrée **30.1** de l'étage d'engrenage épicycloïdal **28.** De même, on en déduit que, dans ce deuxième exemple, le corps de rotor **20'** du moteur électrique **16** est guidé en rotation par rapport au stator **16** par l'intermédiaire de l'étage d'engrenage épicycloïdal **28.**

De manière remarquable, dans les deux exemples illustrés, l'ensemble rotatif de l'étage d'engrenage épicycloïdal **28** est, en arrière de l'étage d'engrenage épicycloïdal **28,** libre de guidage en rotation et libre de positionnement diamétral par rapport au boitier. On peut ainsi considérer que l'ensemble rotatif de l'étage d'engrenage épicycloïdal **28** est monté en porte-à-faux en arrière de l'étage d'engrenage épicycloïdal **28.** Notamment, on voit que, dans les exemples illustrés, l'extrémité arrière de la tige de liaison **52** est libre de guidage en rotation et libre de positionnement diamétral par rapport au boitier.

En revanche, on prévoira avantageusement qu'au moins un composant fixe de l'étage d'engrenage épicycloïdal soit relié sans jeu au boitier d'actionneur **12.** Dans les exemples illustrés, le premier train épicycloïdal **28.1** et le deuxième train épicycloïdal **28.2** en série de l'étage d'engrenage épicycloïdal **28** incluent chacun respectivement une seconde roue dentée **32.1, 32.2,** lesquelles sont toutes les deux réalisées sous la forme d'une couronne à denture interne. Dans les deux exemples illustrés, la seconde roue dentée **32.1** du premier train épicycloïdal **28.1** et la seconde roue dentée **32.2** et du deuxième train épicycloïdal **28.2** sont de diamètres différents, mais on comprend que, dans certains modes de réalisation, elles pourraient être de même diamètre. Dans les deux exemples illustrés, la seconde roue dentée **32.1** du premier train épicycloïdal **28.1** et la seconde roue dentée **32.2** et du deuxième train épicycloïdal **28.2** sont réalisées en une seule pièce, mais on comprend qu'elles pourraient être réalisées en deux pièces séparées. Dans les deux exemples illustrés, la seconde roue dentée 32.1 du premier train épicycloïdal **28.1** et la seconde roue dentée **32.2** et du deuxième train épicycloïdal **28.2** sont réalisées sous la forme d'une pièce commune cylindrique de révolution autour de l'axe principal **A2.** Cette pièce commune est avantageusement fixée de manière rigide par rapport au boîtier. Elle pourrait être réalisée venue une matière en une seule pièce avec au moins une partie du boîtier, et/ou avec une paroi interne du boîtier, et/ou être fixée par des moyens détachables ou non (vis, rivets, encliquetage, soudage, collage, ...) sur une partie du boîtier **12** et/ou une paroi interne liée au boîtier **12.** En fonctionnement, le ou les composants fixes de l'étage d'engrenage épicycloïdal **28** ont ainsi une position fixe par rapport au boîtier.

Toutefois, on comprend que, au niveau de l'étage d'engrenage épicycloïdal **28,** les roues dentées satellites, qui, dans les exemples illustrés, sont interposées mécaniquement entre, d'une part, les composants rotatifs d'entrée et de sortie, et d'autre part les composants fixes, assure une forme de positionnement diamétral entre, d'une part, les composants rotatifs d'entrée et de sortie, et d'autre part les composants fixes qui sont reliés sans jeu au boîtier de l'actionneur. En statique, ce positionnement diamétral est relativement imprécis, avec donc un jeu de débattement important, par exemple supérieur à 0,2 millimètre. En revanche, en fonctionnement, les efforts d'engrènement qui interviennent dans l'étage d'engrenage épicycloïdal **28** tendent à déterminer une position relative entre, d'une part, l'ensemble rotatif de l'étage d'engrenage épicycloïdal **28,** et d'autre part le ou les composants fixes de l'étage d'engrenage épicycloïdal. De la sorte, ce positionnement en fonctionnement de l'ensemble rotatif est réalisé sans rajouter des guidages en rotation supplémentaire, et donc en limitant les efforts parasites de transmission. On rappelle que, dans le second exemple de réalisation de la **Fig. 5****,** ce positionnement en fonctionnement de l'ensemble rotatif implique le même positionnement en fonctionnement du corps de rotor **20'** du moteur électrique **16** par rapport au stator **23.**

Dans un jeu de roues dentées satellites d'un train épicycloïdal, les roues dentées satellites sont réparties angulairement de manière uniforme autour de l'axe principal. Ceci permet d'équilibrer les efforts d'engrènement en fonctionnement, ce qui contribue à un centrage naturel des composants rotatifs du train épicycloïdal. Ainsi, chaque train épicycloïdal peut présenter à minima deux roues dentées satellites agencées à 180° l'unede l'autre autour de l'axe principal **A2,** mais de préférence au moins trois roues dentées satellites agencées à 120° l'une de l'autre autour de l'axe principal **A2,** voire par exemple quatre roues dentées satellites agencées à 90° l'ure de l'autre autour de l'axe principal **A2,** etc.... Donc, dans les exemples, avec des jeux de roues dentées satellites dans chacun desquels les roues dentées satellites sont réparties angulairement de manière uniforme autour de l'axe principal **A2,** l'ensemble rotatif de l'étage d'engrenage épicycloïdal **28** tend à se centrer par rapport aux composants fixes de l'étage d'engrenage épicycloïdal **28,** à savoir dans les exemples illustrés les deux couronnes à denture interne **32.1** et **32.2.** Ce centrage est de préférence autorisé par le jeu de débattement entre l'ensemble rotatif et le boîtier **12.** On limite encore ainsi un peu plus les efforts parasites de transmission à l'intérieur de l'étage d'engrenage épicycloïdal **28.**

En résumé, l'ensemble rotatif de l'étage d'engrenage épicycloïdal **28** est monté flottant par rapport au boitier, diamétralement par rapport à l'axe principal **A2,** et les roues dentées satellites de l'étage d'engrenage épicycloïdal **28** sont réparties angulairement de manière uniforme autour de l'axe principal A2 pour assurer, en fonctionnement, un centrage naturel sous effort de l'ensemble rotatif de l'étage d'engrenage épicycloïdal **28** par rapport au boîtier.

Dans les deux exemples illustrés, l'étage d'engrenage épicycloïdal **28** comporte, en plus de son composant d'entrée et de son composant de sortie, d'autres composants qui, en fonctionnement, sont rotatifs autour de l'axe principal **A2.** Notamment, le premier train épicycloïdal **28.1** comporte son porte satellite **36.1** qui est rotatif autour de l'axe principal **A2.** De même, le deuxième train épicycloïdal **28.2** comportent sa première roue dentée **30.2** qui est elle aussi rotative autour de l'axe principal **A2.** On rappelle que, dans les exemples illustrés, ces deux composants sont solidaires l'un de l'autre, par exemple réalisés sous la forme d'une pièce unique. Ce ou ces autres composants rotatifs peuvent avantageusement être également guidés en rotation sur la tige de liaison **52** avec un deuxième jeu diamétral de guidage « **jg2** » par rapport à l'axe principal **A2.** Le deuxième jeu diamétral de guidage **«jg2** » peut être égal au premier jeu diamétral de guidage **« jg1** ». Cependant, dans certaines variantes, ces composants rotatifs internes, autres que le composant d'entrée et que le composant de sortie, peuvent au contraire être simplement positionnés diamétralement par rapport à la tige de liaison **52,** dans ce cas avec un jeu diamétral de débattement par rapport à l'axe principal **A2** qui sera typiquement au moins trois fois supérieur au premier jeu diamétral de guidage « **jg1** » par rapport à l'axe principal **A2,** de préférence au moins cinq fois supérieur au premier jeu diamétral de guidage **« jg1** ».

## Revendications

1. Actionneur pour un organe d'un véhicule automobile terrestre, du type comportant un boitier d'actionneur **(12)** qui délimite un volume interne dans lequel sont agencés :
- au moins un moteur électrique **(16)** ayant une pièce de sortie moteur **(20),** la pièce de sortie moteur ayant un axe de rotation **(A1),**
- et une transmission mécanique **(18)** comprenant au moins un train d'engrenages réducteur **(22)** pour transmettre un mouvement de la pièce de sortie moteur **(20, 20')** du moteur électrique **(16)** à un connecteur mécanique de sortie **(24)** de l'actionneur **(10),**
du type dans lequel le train d'engrenages réducteur **(22)** comporte au moins un étage d'engrenage épicycloïdal **(28, 28.1, 28.2,),** ayant un composant d'entrée **(30.1)** et un composant de sortie **(36.2)** qui sont rotatifs par rapport au boîtier autour d'un axe principal **(A2),** et au moins un jeu de roues dentées satellites **(34.1, 34.2)** réparties angulairement de manière uniforme autour de l'axe principal **(A2),** la vitesse de rotation du composant d'entrée **(30.1)** étant supérieure à la vitesse de rotation du composant de sortie **(36.2),**
du type dans lequel le composant d'entrée **(30.1)** est relié mécaniquement à la pièce de sortie moteur **(20, 20')** par une liaison mécanique qui est, selon la direction de l'axe principal **(A2),** agencée en arrière de l'au moins un jeu de roues dentées satellites **(34.1, 34.2)** selon la direction de l'axe principal **(A2),** et le connecteur mécanique de sortie **(24)** est destiné à être relié à l'organe du véhicule automobile terrestre par une liaison mécanique vers l'avant de l'au moins un jeu de roues dentées satellites selon la direction de l'axe principal **(A2),** du type comportant un capteur de position angulaire **(42)** comportant un détecteur **(44)** et une cible **(46),**
du type dans lequel la cible **(46)** du capteur de position angulaire **(42)** est, selon la direction de l'axe principal **(A2),** agencée en arrière de l'au moins un jeu de roues dentées satellites **(34.1, 34.2)** selon la direction de l'axe principal **(A2)** de l'étage d'engrenage épicycloïdal **(28, 28.1, 28.2)** et est montée solidaire sur une tige de liaison **(52)** qui est solidaire en rotation du connecteur mécanique de sortie **(24)** de l'actionneur **(10);** et qui traverse axialement l'étage d'engrenage épicycloïdal **(28, 28.1, 28.2)** selon son axe principal **(A2),**
**dans lequel** le composant d'entrée de l'étage d'engrenage épicycloïdal est guidé en rotation sur la tige de liaison **(52)** avec un premier jeu diamétral de guidage (« **jg1** ») positif par rapport à l'axe principal **(A2),**
et dans lequel le composant de sortie de l'étage d'engrenage épicycloïdal est rigidement lié la tige de liaison **(52),**
en ce qu'au moins un composant fixe de l'étage d'engrenage épicycloïdal est relié sans jeu au boitier d'actionneur **(12),**
et dans lequel le composant d'entrée **(30.1)** et le composant de sortie (36.2) de l'étage d'engrenage épicycloïdal **(28)** appartiennent à un ensemble rotatif de l'étage d'engrenage épicycloïdal **(28)** qui est positionné par rapport au boitier d'actionneur **(12),** diamétralement par rapport à l'axe principal (A2), avec un jeu diamétral de débattement positif (« **jd** ») par rapport à l'axe principal **(A2)** pour limiter le débattement de l'étage d'engrenage épicycloïdal **(28)** par rapport au boîtier d'actionneur **(12),** le moteur électrique (16) étant agencé, selon la direction de l'axe principal **(A2),** en avant d'une carte à circuits imprimés (48) qui porte le détecteur du capteur de position angulaire,
, **caractérisé en ce que**
le jeu diamétral de débattement (« jd ») est au moins 3 fois supérieur au premier jeu diamétral de guidage (« jg1 »),
le train d'engrenages réducteur **(22)** comporte au moins un étage d'engrenage **(38)** qui, selon la direction de l'axe principal **(A2),** est agencé en arrière de la carte à circuits imprimés **(48)** qui porte le détecteur **(44)** du capteur de position angulaire **(42),**
la pièce de sortie moteur **(20)** est, selon la direction de l'axe principal **(A2),** agencée à l'arrière du moteur électrique **(16),** et l'étage d'engrenage **(38)** qui, selon la direction de l'axe principal **(A2),** est agencé en arrière de la carte à circuits imprimés **(48)** comporte un pignon moteur **(38.1)** qui est solidaire d'un arbre de sortie moteur **(20),** lequel traverse axialement le plan de la carte à circuits imprimés **(48).**

2. Actionneur selon la revendication **1, caractérisé en ce que** le jeu diamétral de débattement (« **jd** ») est au moins 5 fois supérieur au premier jeu diamétral de guidage (« **jg1** »).

3. Actionneur selon l'une quelconque des revendications **1** ou **2, caractérisé en ce que** le premier jeu diamétral de guidage (« **jg1** ») par rapport à l'axe principal **(A2)** est inférieur ou égal à 0,05 millimètre, et le jeu diamétral de débattement (« **jd** ») par rapport à l'axe principal **(A2)** est supérieur ou égal à 0.2 millimètre.

4. Actionneur selon l'une quelconque des revendications précédentes, **caractérisé en ce que** l'étage d'engrenage épicycloïdal comporte un train épicycloïdal **(28.2)** incluant une première roue dentée **(30.2)** et une seconde roue dentée **(32.2)** ayant chacune un axe de symétrie de révolution qui coïncide avec l'axe principal **(A2),** et incluant au moins un jeu de roues dentées satellites **(34.2)** réparties angulairement de manière uniforme autour de l'axe principal **(A2)** et montées à libre rotation sur un porte-satellite **(36.2),** et **en ce que** le porte-satellites forme le composant de sortie de l'étage d'engrenage épicycloïdal.

5. Actionneur selon l'une quelconque des revendications **1** à **4, caractérisé en ce que** l'étage d'engrenage épicycloïdal comporte plusieurs trains épicycloïdaux en série **(28.1, 28.2).**

6. Actionneur selon la revendication **5, caractérisé en ce que** les trains épicycloïdaux en série de l'étage d'engrenage épicycloïdal **(28)** incluent chacun une première roue dentée **(30.1, 30.2)** et une seconde roue dentée **(32.1, 32.2)** ayant chacune un axe de symétrie de révolution qui coïncide avec l'axe principal **(A2),** et incluent chacun au moins un jeu de roues dentées satellites **(34.1, 34.2)** réparties angulairement de manière uniforme autour de l'axe principal **(A2)** et montées à libre rotation sur un porte-satellite **(36.1, 36.2),** et **en ce que** le porte-satellites **(36.2)** d'un dernier **(28.2)** des trains épicycloïdaux forme le composant rotatif de sortie de l'étage d'engrenage épicycloïdal **(28).**

7. Actionneur selon la revendication **6, caractérisé en ce que** le premier train épicycloïdal **(28.1)** comporte une première roue dentée **(30.1)** à denture externe qui forme le composant rotatif d'entrée **(30.1)** de l'étage d'engrenage épicycloïdal, et **en ce que** le premier train épicycloïdal et le dernier train épicycloïdal comportent chacun une seconde roue à denture interne qui sont des composants fixes de l'étage d'engrenage épicycloïdal et qui sont reliées sans jeu au boitier d'actionneur **(12).**

8. Actionneur selon la revendication **7, caractérisé en ce que** le premier train épicycloïdal **(28.1)** comporte un porte-satellite **(36.1)** qui porte un jeu de roues dentées satellites du premier train épicycloïdal et qui est guidé en rotation sur la tige de liaison **(52)** avec un jeu de guidage (« **jg2** »).

9. Actionneur selon l'une des revendications **7** ou **8, caractérisé en ce que** le dernier train épicycloïdal **(28.1)** comporte une première roue dentée **(30.2)** à denture externe qui est guidée en rotation sur la tige de liaison **(52)** avec un jeu de guidage (« **jg2** »).

10. Actionneur selon l'une quelconque des revendications précédentes, **caractérisé en ce que** l'ensemble rotatif de l'étage d'engrenage épicycloïdal **(28)** est, selon la direction de l'axe principal **(A2),** en arrière de l'étage d'engrenage épicycloïdal, libre de guidage en rotation et libre de positionnement diamétral.

11. Actionneur selon l'une quelconque des revendications précédentes, **caractérisé en ce que** l'axe de rotation **(A1)** de la pièce de sortie moteur **(20, 20')** du moteur électrique **(16)** est parallèle à l'axe principal **(A2).**

12. Actionneur selon l'une quelconque des revendications précédentes, **caractérisé en ce qu'**il comporte une carte à circuits imprimés **(48)** qui porte le détecteur **(44)** du capteur de position angulaire **(42)** et qui est agencée selon un plan perpendiculaire à l'axe principal **(A2),** en arrière de l'au moins un jeu de roues dentées satellites **(34.1, 34.2, 34')** selon la direction de l'axe principal **(A2),** et **en ce que** la cible **(46)** est agencée sur la tige de liaison **(52)** en regard d'une face avant de la carte à circuits imprimés **(48).**

13. Actionneur selon l'une quelconque des revendications précédentes, **caractérisé en ce que** le capteur de position angulaire **(42)** est un capteur à courants de Foucault.

## Patentansprüche

1. Aktuator für ein Organ eines Landkraftfahrzeugs von dem Typ, der ein Aktuatorgehäuse (12) umfasst, das ein Innenvolumen abgrenzt, in dem angeordnet sind:
- mindestens ein Elektromotor (16), der ein Motorabtriebsteil (20) aufweist, wobei das Motorabtriebsteil eine Drehachse (A1) aufweist,
- und eine mechanische Kraftübertragung (18), die mindestens ein Untersetzungsgetriebe (22) zum Übertragen einer Bewegung von dem Motorabtriebsteil (20, 20') des Elektromotors (16) auf einen mechanischen Abtriebsverbinder (24) des Aktuators (10) umfasst,
von dem Typ, in dem das Untersetzungsgetriebe (22) mindestens eine Planetengetriebestufe (28, 28.1, 28.2), die eine Antriebskomponente (30.1) und eine Abtriebskomponente (36.2) aufweist, die in Bezug auf das Gehäuse um eine Hauptachse (A2) drehbar sind, und mindestens einen Satz Planetenzahnräder (34.1, 34.2) umfasst, die gleichförmig winklig um die Hauptachse (A2) verteilt sind, wobei die Drehzahl der Antriebskomponente (30.1) höher als die Drehzahl der Abtriebskomponente (36.2) ist,
von dem Typ, in dem die Antriebskomponente (30.1) über eine mechanische Verbindung, die entlang der Richtung der Hauptachse (A2) hinter dem mindestens einen Satz Planetenzahnräder (34.1, 34.2) entlang der Richtung der Hauptachse (A2) angeordnet ist, mechanisch mit dem Motorabtriebsteil (20, 20') verbunden ist, und der mechanische Abtriebsverbinder (24) dazu bestimmt ist, mit dem Organ des Landkraftfahrzeugs über eine mechanische Verbindung des mindestens einen Satzes Planetenzahnräder entlang der Richtung der Hauptachse (A2) nach vorne verbunden zu werden,
von dem Typ, der einen Winkelpositionssensor (42) umfasst, der einen Detektor (44) und ein Ziel (46) umfasst,
von dem Typ, in dem das Ziel (46) des Winkelpositionsgebers (42) entlang der Richtung der Hauptachse (A2) hinter dem mindestens einen Satz Planetenzahnräder (34.1, 34.2) entlang der Richtung der Hauptachse (A2) der Planetengetriebestufe (28, 28.1, 28.2) angeordnet ist und fest verbunden an einer Verbindungsstange (52) montiert ist, die drehfest mit dem mechanischen Abtriebsverbinder (24) des Aktuators (10) ist; und die die Planetengetriebestufe (28, 28.1, 28.2) entlang ihrer Hauptachse (A2) axial durchquert,
wobei die Antriebskomponente der Planetengetriebestufe mit einem ersten positiven diametralen Führungsspiel ("jg1") in Bezug auf die Hauptachse (A2) drehbar auf der Verbindungsstange (52) geführt wird,
und wobei die Abtriebskomponente der Planetengetriebestufe starr mit der Verbindungsstange (52) verbunden ist,
dadurch, dass mindestens eine feste Komponente der Planetengetriebestufe ohne Spiel mit dem Aktuatorgehäuse (12) verbunden ist,
und wobei die Antriebskomponente (30.1) und die Abtriebskomponente (36.2) der Planetengetriebestufe (28) zu einer Drehbaugruppe der Planetengetriebestufe (28) gehören, die in Bezug auf das Aktuatorgehäuse (12) diametral in Bezug auf die Hauptachse (A2) mit einem positiven diametralen Bewegungsspiel ("jd") in Bezug auf die Hauptachse (A2) angeordnet ist, um die Bewegung der Planetengetriebestufe (28) in Bezug auf das Aktuatorgehäuse (12) zu begrenzen,
wobei der Elektromotor (16) entlang der Richtung der Hauptachse (A2) vor einer Leiterplatte (48) angeordnet ist, die den Detektor des Winkelpositionssensors trägt,
**dadurch gekennzeichnet, dass** das diametrale Bewegungsspiel ("jd") mindestens 3 Mal größer als das erste diametrale Führungsspiel ("jg1") ist,
wobei das Untersetzungsgetriebe (22) mindestens eine Getriebestufe (38) umfasst, die entlang der Richtung der Hauptachse (A2) hinter der Leiterpatte (48) angeordnet ist, die den Detektor (44) des Winkelpositionssensors (42) trägt,
wobei das Motorabriebsteil (20) entlang der Richtung der Hauptachse (A2) hinter dem Elektromotor (16) angeordnet ist und die Getriebestufe (38), die entlang der Richtung der Hauptachse (A2) hinter der Leiterplatte (48) angeordnet ist, ein Antriebsritzel (38.1) umfasst, das fest mit einer Motorabtriebswelle (20) verbunden ist, die die Ebene der Leiterplatte (48) axial durchquert.

2. Aktuator nach Anspruch 1, **dadurch gekennzeichnet, dass** das diametrale Bewegungsspiel ("jd") mindestens 5 Mal größer als das erste diametrale Führungsspiel ("jg1") ist.

3. Aktuator nach einem der Ansprüche 1 oder 2, **dadurch gekennzeichnet, dass** das erste diametrale Führungsspiel ("jg1") in Bezug auf die Hauptachse (A2) kleiner oder gleich 0,05 Millimeter ist und das diametrale Bewegungsspiel ("jd") in Bezug auf die Hauptachse (A2) größer oder gleich 0,2 Millimeter ist.

4. Aktuator nach einem der vorhergehenden Ansprüche, **dadurch gekennzeichnet, dass** die Planetengetriebestufe einen Planetenradsatz (28.2) umfasst, der ein erstes Zahnrad (30.2) und ein zweites Zahnrad (32.2) umfasst, die jeweils eine Drehsymmetrieachse aufweisen, die mit der Hauptachse (A2) zusammenfällt, und mindestens einen Satz von Planetenzahnrädern (34.2) umfasst, die gleichförmig winklig um die Hauptachse (A2) verteilt sind und frei drehbar auf einem Planetenradträger (36.2) gelagert sind, und dadurch, dass der Planetenradträger die Abtriebskomponente der Planetengetriebestufe bildet.

5. Aktuator nach einem der Ansprüche 1 bis 4, **dadurch gekennzeichnet, dass** die Planetengetriebestufe mehrere Planetenradsätze (28.1, 28.2) in Reihe umfasst.

6. Aktuator nach Anspruch 5, **dadurch gekennzeichnet, dass** die in Reihe eingerichteten Planetenradsätze der Planetengetriebestufe (28) jeweils ein erstes Zahnrad (30.1, 30.2) und ein zweites Zahnrad (32.1, 32.2) umfassen, die jeweils eine Drehsymmetrieachse aufweisen, die mit der Hauptachse (A2) zusammenfällt, und jeweils mindestens einen Satz von Planetenzahnrädern (34.1, 34.2) umfassen, die gleichförmig winklig um die Hauptachse (A2) verteilt sind und frei drehbar auf einem Planetenradträger (36.1, 36.2) gelagert sind, und dadurch, dass der Planetenradsätze (36.2) eines letzten (28.2) der Planetenradsätze die Abtriebsdrehkomponente der Planetengetriebestufe (28) bildet.

7. Aktuator nach Anspruch 6, **dadurch gekennzeichnet, dass** der erste Planetenradsatz (28.1) ein erstes Zahnrad (30.1) mit Außenzahnung umfasst, das die Antriebsdrehkomponente (30.1) der Planetengetriebestufe bildet, und dadurch, dass der erste Planetenradsatz und der letzte Planetenradsatz jeweils ein zweites Rad mit Innenzahnung umfassen, die feste Komponenten der Planetengetriebestufe sind und die ohne Spiel mit dem Aktuatorgehäuse (12) verbunden sind.

8. Aktuator nach Anspruch 7, **dadurch gekennzeichnet, dass** der erste Planetenradsatz (28.1) einen Planetenradträger (36.1) umfasst, der einen Satz Planetenzahnräder des ersten Planetenradsatzes trägt und der mit einem Führungsspiel ("jg2") drehbar auf der Verbindungsstange (52) geführt wird.

9. Aktuator nach einem der Ansprüche 7 oder 8, **dadurch gekennzeichnet, dass** der letzte Planetenradsatz (28.1) ein erstes Zahnrad (30.2) mit Außenzahnung trägt, das mit einem Führungsspiel ("jg2") drehbar auf der Verbindungsstange (52) geführt wird.

10. Aktuator nach einem der vorhergehenden Ansprüche, **dadurch gekennzeichnet, dass** die Drehbaugruppe der Planetengetriebestufe (28) sich frei drehbar geführt und frei diametral positionierbar entlang der Richtung der Hauptachse (A2) hinter der Planetengetriebestufe befindet.

11. Aktuator nach einem der vorhergehenden Ansprüche, **dadurch gekennzeichnet, dass** die Drehachse (A1) des Motorabtriebsteils (20, 20') des Elektromotors (16) parallel zur Hauptachse (A2) ist.

12. Aktuator nach einem der vorhergehenden Ansprüche, **dadurch gekennzeichnet, dass** er eine Leiterplatte (48) umfasst, die den Detektor (44) des Winkelpositionssensors (42) trägt und die entlang der Richtung der Hauptachse (A2) entlang einer Ebene senkrecht zur Hauptachse (A2) hinter dem mindestens einen Satz Planetenzahnräder (34.1, 34.2, 34') angeordnet ist, und dadurch, dass das Ziel (46) an der Verbindungsstange (52) gegenüber einer Vorderseite der Leiterplatte (48) angeordnet ist.

13. Aktuator nach einem der vorhergehenden Ansprüche, **dadurch gekennzeichnet, dass** der Winkelpositionssensor (42) ein Wirbelstromsensor ist.

## Claims

1. An actuator for a member of a land motor vehicle, of the type including an actuator casing (12) which delimits an internal volume in which are arranged:
- at least one electric motor (16) having a motor output part (20), the motor output part having an axis of rotation (A1),
- and a mechanical transmission (18) comprising at least one reduction gear train (22) to transmit a motion of the motor output part (20, 20') of the electric motor (16) to an output mechanical connector (24) of the actuator (10),
of the type in which the reduction gear train (22) includes at least one epicyclic gear stage (28, 28.1, 28.2,), having an input component (30.1) and an output component (36.2) which are rotatable relative to the casing about a main axis (A2), and at least one set of planet gear wheels (34.1, 34.2) angularly distributed in a uniform manner about the main axis (A2), the speed of rotation of the input component (30.1) being greater than the speed of rotation of the output component (36.2),
of the type in which the input component (30.1) is mechanically connected to the motor output part (20, 20') by a mechanical connection which is arranged, along the direction of the main axis (A2), behind the at least one set of planet gear wheels (34.1, 34.2) along the direction of the main axis (A2), and the output mechanical connector (24) is intended to be connected to the member of the land motor vehicle by a mechanical connection towards the front of the at least one set of planet gear wheels along the direction of the main axis (A2),
of the type including an angular position sensor (42) including a detector (44) and a target (46),
of the type in which the target (46) of the angular position sensor (42) is arranged, along the direction of the main axis (A2), behind the at least one set of planet gear wheels (34.1, 34.2) along the direction of the main axis (A2) of the epicyclic gear stage (28, 28.1, 28.2) and is mounted in a secured manner on a connecting rod (52) which is secured in rotation to the output mechanical connector (24) of the actuator (10);
and which axially passes through the epicyclic gear stage (28, 28.1, 28.2) along its main axis (A2),
**in which** the input component of the epicyclic gear stage is guided in rotation on the connecting rod (52) with a first positive diametrical guide clearance ("jg1") relative to the main axis (A2),
and in which the output component of the epicyclic gear stage is rigidly connected to the connecting rod (52),
in that at least one fixed component of the epicyclic gear stage is connected without clearance to the actuator casing (12),
and in which the input component (30.1) and the output component (36.2) of the epicyclic gear stage (28) belong to a rotatable assembly of the epicyclic gear stage (28) which is positioned relative to the actuator casing (12), diametrically relative to the main axis (A2), with a positive diametrical displacement clearance ("jd") relative to the main axis (A2) to limit the displacement of the epicyclic gear stage (28) relative to the actuator casing (12),
the electric motor (16) is arranged, along the direction of the main axis (A2), in front of a printed circuit board which carries the detector of the angular position sensor,
**characterized in that** the diametrical displacement clearance ("jd") being at least 3 times greater than the first diametrical guide clearance ("jg1").
the reduction gear train (22) includes at least one gear stage (38) which is arranged, along the direction of the main axis (A2), behind the printed circuit board (48) which carries the detector (44) of the angular position sensor (42).
the motor output part (20) is arranged, along the direction of the main axis (A2), behind the electric motor (16) and the gear stage (38) which is arranged, along the direction of the main axis (A2), behind the printed circuit board (48) includes a motor pinion (38.1) which is secured to a motor output shaft (20), which axially passes through the plane of the printed circuit board (48).

2. The actuator according to claim 1, **characterized in that** the diametrical displacement clearance ("jd") is at least 5 times greater than the first diametrical guide clearance ("jg1").

3. The actuator according to any one of claims 1 or 2, **characterized in that** the first diametrical guide clearance ("jg1") relative to the main axis (A2) is less than or equal to 0.05 millimeters, and the diametrical displacement clearance ("jd") relative to the main axis (A2) is greater than or equal to 0.2 millimeters.

4. The actuator according to any one of the preceding claims, **characterized in that** the epicyclic gear stage includes an epicyclic train (28.2) including a first gear wheel (30.2) and a second gear wheel (32.2) each having a symmetrical axis of revolution which coincides with the main axis (A2), and including at least one set of planet gear wheels (34.2) angularly distributed in a uniform manner about the main axis (A2) and mounted in free rotation on a planet gear carrier (36.2), and **in that** the planet gear carrier forms the output component of the epicyclic gear stage.

5. The actuator according to any one of claims 1 to 4, **characterized in that** the epicyclic gear stage includes several epicyclic trains (28.1, 28.2) in series.

6. The actuator according to claim 5, **characterized in that** the epicyclic trains in series of the epicyclic gear stage (28) each include a first gear wheel (30.1, 30.2) and a second gear wheel (32.1, 32.2) each having a symmetrical axis of revolution that coincides with the main axis (A2), and each including at least one set of planet gear wheels (34.1, 34.2) angularly distributed in a uniform manner about the main axis (A2) and mounted in free rotation on a planet gear carrier (36.1, 36.2), and **in that** the planet gear carrier (36.2) of a last (28.2) of the epicyclic trains forms the rotatable output component of the epicyclic gear stage (28).

7. The actuator according to claim 6, **characterized in that** the first epicyclic train (28.1) includes a first gear wheel (30.1) with external gear teeth which forms the rotatable input component (30.1) of the epicyclic gear stage, and **in that** the first epicyclic train and the last epicyclic train each include a second gear wheel with internal gear teeth which are fixed components of the epicyclic gear stage and which are connected without clearance to the actuator casing (12).

8. The actuator according to claim 7, **characterized in that** the first epicyclic train (28.1) includes a planet gear carrier (36.1) which carries a set of planet gear wheels of the first epicyclic train and which is guided in rotation on the connecting rod (52) with a guide clearance ("jg2").

9. The actuator according to any of claims 7 or 8, **characterized in that** the last epicyclic train (28.1) includes a first gear wheel (30.2) with external gear teeth which is guided in rotation on the connecting rod (52) with a guide clearance ("jg2").

10. The actuator according to any one of the preceding claims, **characterized in that** the rotatable assembly of the epicyclic gear stage (28) is, along the direction of the main axis (A2), behind the epicyclic gear stage, free in rotational guidance and free in diametrical positioning.

11. The actuator according to any one of the preceding claims, **characterized in that** the axis of rotation (A1) of the motor output part (20, 20') of the electric motor (16) is parallel to the main axis (A2).

12. The actuator according to any one of the preceding claims, **characterized in that** it includes a printed circuit board (48) which carries the detector (44) of the angular position sensor (42) and which is arranged in a plane perpendicular to the main axis (A2), behind the at least one set of planet gear wheels (34.1, 34.2, 34') along the direction of the main axis (A2), and **in that** the target (46) is arranged on the connecting rod (52) facing a front face of the printed circuit board (48).

13. The actuator according to any one of the preceding claims, **characterized in that** the angular position sensor (42) is an Eddy current sensor.
